(19) Europäisches Patentamt / European Patent Office / Office européen des brevets

(11) **EP 4 604 078 A1**

(12) **EUROPÄISCHE PATENTANMELDUNG**

(43) Veröffentlichungstag:
   **20.08.2025   Patentblatt 2025/34**

(21) Anmeldenummer: **24157951.5**

(22) Anmeldetag: **15.02.2024**

(51) Internationale Patentklassifikation (IPC):
   **G06V 10/82** (2022.01)      **G06V 20/58** (2022.01)
   **G08G 1/16** (2006.01)

(52) Gemeinsame Patentklassifikation (CPC):
   **G06V 10/82; G06V 20/58; G08G 1/16**

(84) Benannte Vertragsstaaten:
   **AL AT BE BG CH CY CZ DE DK EE ES FI FR GB GR HR HU IE IS IT LI LT LU LV MC ME MK MT NL NO PL PT RO RS SE SI SK SM TR**
   Benannte Erstreckungsstaaten:
   **BA**
   Benannte Validierungsstaaten:
   **GE KH MA MD TN**

(71) Anmelder: **Robert Bosch GmbH**
   **70442 Stuttgart (DE)**

(72) Erfinder:
   • **Lyssenko, Maria**
     **70439 Stuttgart (DE)**
   • **Heinzemann, Christian**
     **34246 Vellmar (DE)**
   • **Woehrle, Matthias**
     **74321 Bietigheim-Bissingen (DE)**
   • **Bieshaar, Maarten**
     **34560 Fritzlar (DE)**

(54) **VERFAHREN ZUM TRAINIEREN EINES MASCHINELLEN LERNMODELLS ZUM DETEKTIEREN VON VERKEHRSTEILNEHMERN IN VERKEHRSSITUATIONEN**

(57)   Gemäß verschiedenen Ausführungsformen wird ein Verfahren zum Trainieren eines maschinellen Lernmodells (108, 200) zum Detektieren von Verkehrsteilnehmern in Verkehrssituationen bereitgestellt, aufweisend, für jeden mehrerer aus Sicht eines Fahrzeugs (101) in einer jeweilige Verkehrssituation zu detektierenden Verkehrsteilnehmer in einem Trainingsdatensatz, Ermitteln eines Maßes für das Risiko eines Unfalls des Fahrzeugs (101) mit dem Verkehrsteilnehmer in der jeweiligen Verkehrssituation, Durchführen einer Detektion von Verkehrsteilnehmern in dem Trainingsdatensatz durch das maschinelle Lernmodell, Ermitteln eines Gesamtverlusts der durch das maschinelle Lernmodell durchgeführten Detektion, der für jeden der zu detektierenden Verkehrsteilnehmer einen Detektions-Verlust enthält, wobei der Detektions-Verlust im Gesamtverlust abhängig von einem Wert gewichtet wird, der umso größer ist, je höher das für den Verkehrsteilnehmer ermittelte Maß für das Risiko eines Unfalls des Fahrzeugs (101) mit dem Verkehrsteilnehmer ist und Anpassen des maschinellen Lernmodells zum Reduzieren des Gesamtverlusts.

Fig. 3

EP 4 604 078 A1

**Beschreibung**

Die vorliegende Offenbarung bezieht sich auf Verfahren zum Trainieren eines maschinellen Lernmodells zum Detektieren von Verkehrsteilnehmern in Verkehrssituationen.

Objektdetektion (insbesondere in Bildern) ist eine häufige Aufgabe im Zusammenhang der Steuerung von Fahrzeugen. Typischerweise sollen dabei andere Verkehrsteilnehmer wie andere Fahrzeuge, Fußgänger, Fahrradfahrer aber auch stationäre Hindernisse erkannt werden. Dafür können maschinelle Lernmodelle (z.B. neuronale Netze) eingesetzt werden. Um eine hohe Sicherheit zu erreichen, ist eine hohe Detektionsgüte wünschenswert, es ist aber nicht realistisch, für alle Objekte eine perfekte Detektion zu erreichen. Es sind deshalb maschinelle Lernmodelle wünschenswert, die zumindest für sicherheitskritische Objekte eine hohe Detektionsgüte erreichen.

Die Veröffentlichung M. Lyssenko, C. Gladisch, C. Heinzemann, M. Woehrle und R. Triebel, "Towards Safety-Aware Pedestrian Detection in Autonomous Systems," 2022 IEEE/RSJ International Conference on Intelligent Robots and Systems (IROS), Kyoto, Japan, 2022, pp. 293-300, im Folgenden als Referenz [1] bezeichnet, und die Veröffentlichung P. Schneider, M. Butz, C. Heinzemann, J. Oehlerking und M. Woehrle, "Towards threat metric evaluation in complex urban scenarios," 2021 IEEE International Intelligent Transportation Systems Conference (ITSC), Indianapolis, IN, USA, 2021, pp. 1192-1198, im Folgenden als Referenz [2] bezeichnet, beschreiben ein Reachability-Set-Framework zur Ermittlung von Bedrohungsmetriken.

Gemäß verschiedenen Ausführungsformen wird ein Verfahren zum Trainieren eines maschinellen Lernmodells zum Detektieren von Verkehrsteilnehmern in Verkehrssituationen bereitgestellt, aufweisend:

- Für jeden mehrerer aus Sicht eines Fahrzeugs in einer jeweilige Verkehrssituation zu detektierenden Verkehrsteilnehmer in einem Trainingsdatensatz, Ermitteln eines Maßes für das Risiko eines Unfalls des Fahrzeugs mit dem Verkehrsteilnehmer in der jeweiligen Verkehrssituation;
- Durchführen einer Detektion von Verkehrsteilnehmern in dem Trainingsdatensatz durch das maschinelle Lernmodell;
- Ermitteln eines Gesamtverlusts der durch das maschinelle Lernmodell durchgeführten Detektion, der für jeden der zu detektierenden Verkehrsteilnehmer einen Detektions-Verlust enthält, wobei der Detektions-Verlust im Gesamtverlust abhängig von einem Wert gewichtet wird, der umso größer ist, je höher das für den Verkehrsteilnehmer ermittelte Maß für das Risiko eines Unfalls des Fahrzeugs mit dem Verkehrsteilnehmer ist; und
- Anpassen des maschinellen Lernmodells zum Reduzieren des Gesamtverlusts.

Die obigen Schritte werden beispielsweise für mehrere Trainingsdatensätze (d.h. "Batches") wiederholt, sodass das maschinelle Lernmodell über mehrere Iterationen trainiert wird.

Das oben beschriebene Verfahren ermöglicht ein verbessertes Training eines maschinellen Detektionsmodells (z.B. neuronalen Detektionsnetzwerks) in Hinblick auf die Detektionsgüte für sicherheitskritische Verkehrsteilnehmer (insbesondere beispielsweise Fußgänger oder Fahrradfahrer in der Nähe des Fahrzeugs). Eine korrekte Detektion solcher "Objekte" wird im Training durch die Gewichtung besonders betont, sodass sie gegenüber der Detektion anderer Objekte, die nicht sicherheitskritisch sind (z.B. Fußgänger, die weit entfernt sind) priorisiert wird. Die Gewichtung kann für eine bestimmte Klasse von Objekten (wie gefährdete Personen z.B. Fußgängern oder Radfahrern) vorgenommen werden, während sie für andere Objekte (wie z.B. stationäre unbelebte Objekte) nicht vorgenommen wird (da für diese eine Fehldetektion ggf. nicht so kritisch ist).

Im Folgenden werden verschiedene Ausführungsbeispiele angegeben.

Ausführungsbeispiel 1 ist ein Verfahren zum Trainieren eines maschinellen Lernmodells wie oben beschrieben.

Ausführungsbeispiel 2 ist das Verfahren nach Ausführungsbeispiel 1, wobei das Maß des Risiko eines Unfalls des Fahrzeugs mit dem Verkehrsteilnehmer aus einer Schätzung der Zeit der Kollision zwischen dem jeweiligen Verkehrsteilnehmer und dem Fahrzeug in der jeweiligen Verkehrssituation und/oder der Distanz zwischen dem jeweiligen Verkehrsteilnehmer und dem Fahrzeug in der jeweiligen Verkehrssituation ermittelt wird.

Dies ermöglicht eine einfache und effektive Ermittlung des Maßes des Risikos eines Unfalls des Fahrzeugs mit dem Verkehrsteilnehmer (im Folgenden auch als Kritikalitätswert bezeichnet). Die Schätzung der Zeit der Kollision und Distanz zwischen dem jeweiligen Verkehrsteilnehmer und dem Fahrzeug können auch zu einem Wert für das Maß des Risikos kombiniert werden.

Ausführungsbeispiel 3 ist das Verfahren nach Ausführungsbeispiel 1 oder 2, wobei der Trainingsdatensatz für jede der Verkehrssituationen eine 3D-Repräsentation der Verkehrssituation als Ground-Truth-Informationen enthält und das Maß des Risikos aus der 3D-Repräsentation ermittelt wird.

Die 3D-Reprästentation ermöglicht eine genaue Ermittlung des Maßes des Risikos z.B. durch genaue Schätzung von Distanzen etc. Es können auch Geschwindigkeiten des Fahrzeugs und der Verkehrsteilnehmer als Ground-Truth-Informationen enthalten sein, um eine genaue Ermittlung des Maßes des Risikos zu ermöglichen.

Ausführungsbeispiel 4 ist das Verfahren nach einem der Ausführungsbeispiele 1 bis 3, wobei der Detektionsverlust ein Focal Loss ist, wobei der Modulierungsfaktor durch das Maß des Risikos verringert wird.

Je höher das Maß des Risikos ist, desto geringer ist also der Parameter des Focal Loss zum Fokussieren auf schwierige Klassen, d.h. der Modulierungsfaktor (typischerweise mit γ bezeichnet), sodass der Fokus auf Trainingsbeispiele mit hohem Risikomaß erhöht wird.

Ausführungsbeispiel 5 ist das Verfahren nach einem der Ausführungsbeispiele 1 bis 4, wobei die Detektion von Verkehrsteilnehmern in dem Trainingsdatensatz durch das maschinelle Lernmodell für jedes einer Vielzahl von Trainingsdatenelementen eine Regression zur Bestimmung des Orts der Verkehrsteilnehmer und/oder eine Klassifikation der Verkehrsteilnehmer durch Verarbeitung von Sensordaten, die das Trainingsdatenelement enthält, aufweist.

Ausführungsbeispiel 6 ist ein Verfahren zum Steuern eines Fahrzeugs, aufweisend

- Trainieren eines maschinellen Lernmodells nach einem der Ausführungsbeispiele 1 bis 5;
- Erfassen von Sensordaten (insbesondere Bilddaten) bezüglich einer Umgebung des Fahrzeugs;
- Detektieren von Verkehrsteilnehmern in den Sensordaten mittels des trainierten maschinellen Lernmodells und
- Steuern des Fahrzeugs gemäß der Detektion von Verkehrsteilnehmern in den Sensordaten.

Ausführungsbeispiel 7 ist eine Datenverarbeitungsvorrichtung, die eingerichtet ist, ein Verfahren nach einem der Ausführungsbeispiele 1 bis 6 durchzuführen.

Ausführungsbeispiel 8 ist ein Computerprogramm mit Befehlen, die, wenn sie durch einen Prozessor ausgeführt werden, bewirken, dass der Prozessor ein Verfahren nach einem der Ausführungsbeispiele 1 bis 6 durchführt.

Ausführungsbeispiel 9 ist ein computerlesbares Medium, das Befehle speichert, die, wenn sie durch einen Prozessor ausgeführt werden, bewirken, dass der Prozessor ein Verfahren nach einem der Ausführungsbeispiele 1 bis 6 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.

Figur 1 zeigt ein Fahrzeug.
Figur 2 veranschaulicht das Training eines neuronalen Netzes gemäß einer Ausführungsform.
Figur 3 zeigt ein Ablaufdiagramm, das ein Verfahren zum Trainieren eines maschinellen Lernmodells zum Detektieren von Verkehrsteilnehmern in Verkehrssituationen gemäß einer Ausführungsform veranschaulicht.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

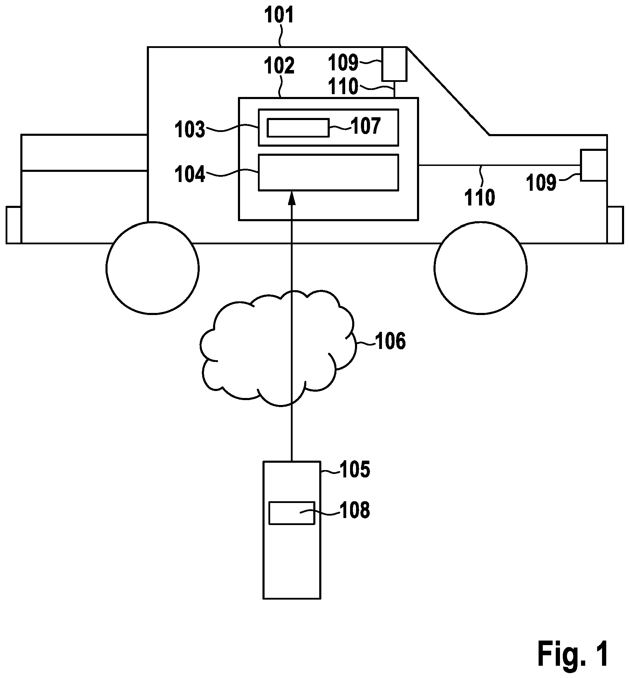

Figur 1 zeigt ein Fahrzeug 101.

Im Beispiel von Figur 1 ist ein Fahrzeug 101, beispielsweise ein PKW oder LKW, mit einer Fahrzeugsteuereinrichtung (auch also elektronische Steuereinheit bezeichnet, z.B. ein Steuergerät, z.B. eine Electronic Control Unit (ECU)) 102 versehen.

Die Fahrzeugsteuereinrichtung 102 weist Datenverarbeitungskomponenten auf, z.B. einen Prozessor (z.B. eine CPU (Zentraleinheit)) 103 und einen Speicher 104 zum Speichern von Steuersoftware 107, gemäß der die Fahrzeugsteuereinrichtung 102 arbeitet, und Daten, die von dem Prozessor 103 verarbeitet werden. Der Prozessor 103 führt die Steuersoftware 107 aus.

Beispielsweise weist die gespeicherte Steuerungssoftware (Computerprogramm) Anweisungen auf, die, wenn der Prozessor sie ausführt, bewirken, dass der Prozessor 103 Fahrerassistenz-Funktionen (d.h. die Funktion eines ADAS (Advanced Driver Assistance System)) ausführt oder sogar das Fahrzeug autonom steuert (AD (Autonomous Driving)).

Die Steuersoftware 107 wird beispielsweise von einem Computersystem 105, z.B. über ein Kommunikationsnetz 106 (oder auch mit Hilfe eines Speichermediums wie einer Speicherkarte), an das Fahrzeug 101 übertragen. Dies kann auch im Betrieb geschehen (oder zumindest, wenn das Fahrzeug 101 beim Benutzer ist), da die Steuersoftware 107 beispielsweise im Laufe der Zeit auf neue Versionen aktualisiert wird.

Die Steuersoftware 107 ermittelt Steueraktionen für das Fahrzeug (wie z.B. Lenkaktionen, Bremsaktionen etc.) aus Eingangsdaten, die ihr zur Verfügung stehen und die Informationen über die Umgebung enthalten bzw. aus denen sie Informationen über die Umgebung ableitet (wie z.B. durch Detektion von anderen Verkehrsteilnehmern, z.B. anderen Fahrzeugen, Fußgänger, Radfahrer etc.). Diese sind beispielsweise Sensordaten von einer oder mehrerer Sensorvorrichtungen 109, wie z.B. von einer Kamera des Fahrzeugs 101, die über ein Kommunikationssystem 110 (z.B. ein Fahrzeug-Bussystem wie CAN (Controller Area Network)) mit der Fahrzeugsteuereinrichtung 102 verbunden sind.

Die Steuersoftware 107 kann beispielsweise mittels maschinellen Lernens (ML) trainiert werden, d.h. die Steuersoftware 107 implementiert beispielsweise maschinelles Lernmodell 108 (z.B. ein neuronales Netz (NN)), das auf der Grundlage von Trainingsdaten, in diesem Beispiel vom Computersystem 105, trainiert wird. Das Computersystem 105 implementiert also einen ML-Trainingsalgorithmus zum Training von einem (oder mehreren) ML-Modelle(n) 108.

Beispielsweise ist das ML-Modell 108 (z.B. ein neuronales Netz) ein ML-Modell zur Objekterkennung (d.h. Objektdetektion, z.B. anderer Verkehrsteilnehmer). Dies kann eine Regression (insbesondere für eine Lokalisierung, z.B. Bestimmung von Bounding-Boxen (d.h. Begrenzungs-"Kästen", d.h. rechteckige (oder auch quaderförmige) Hüllkörper) für Objekte) und/oder eine Klassifikation (z.B. Klassifizieren eines Objekts als Fahrzeug, Fußgänger, Radfahrer oder anderes Objekt) beinhalten.

Die Detektionsleistungsfähigkeit (oder auch Detektionsgüte) eines solchen ML-Modells kann auf Basis von Metriken wie z.B. IoU (Intersect Over Union), Recall oder Precision und mAP (Mean Average Precision) evaluiert werden. In sicherheitskritischen Bereichen, wie beispielsweise dem autonomen Fahren, ist die Anwendung solcher Metriken aus der Risikoperspektive nicht ausreichend, da nicht erkannte, relevante Objekte (z.B. Fußgänger) im statistischen Mittel dieser Metriken untergehen können. Anders formuliert: Diese Metriken beinhalten keinerlei Gewichtung oder Einbeziehung von Kritikalität bei der Bewertung von Objektdetektionsergebnissen. Auch wenn eine Kritikalität bei der Evaluierung berücksichtigt wird, z.B. Metriken verwendet werden, die domänenspezifische Informationen zur Identifikation sicherheitsrelevanter Objekte beinhalten, so wird dadurch im Allgemeinen nicht die Detektionsleistungsfähigkeit verbessert. Die Detektion setzt sich wie oben erwähnt typischerweise aus einer Klassifikation (d.h. die auch als die eigentlich "Detektion" angesehen werden kann) und einer Lokalisation des Objektes (im maschinellen Lernen auch als Regression bezeichnet) zusammen. Die Optimierung der Parameter (oder auch Gewichte) eines jeweiligen neuronalen Netzwerks für diesen Zweck (dies können mehrere Millionen sein) wird als Training bezeichnet. Für diese Optimierung der Gewichte werden eine oder mehrere Verluste (engl. Loss) bzw. eine entsprechende Verlustfunktion optimiert. Beim sogenannten Focal Loss zum Training von neuronalen Objektdetektionsnetzwerken werden so genannte "hard negatives" (schwierige Klassen) im Training mit dem Ziel priorisiert, die Detektionsgüte zu verbessern. Für die Regression, also die Prädiktion der Objektpositionen, sind der L1-Verlust, der Smooth-L1-Verlust und der L2-Verlust typische Verluste.

Gemäß verschiedenen Ausführungsformen werden sicherheitsrelevante Aspekte (d.h. eine Kritikalität, insbesondere ein Unfallrisiko) in das Training eines maschinellen Lernmodells (z.B. eines neuronalen Netzwerks) zur Objektdetektion einbezogen. Durch die Einbeziehung der Kritikalität in das Training kann beispielsweise ein Objektdetektionsnetzwerk mit Sicherheitsbewusstsein "by Design" (engl. safety-awareness by design) bereitgestellt werden.

Um dies zu erreichen wird gemäß verschiedenen Ausführungsformen eine (herkömmliche) Objektdetektions-Verlustfunktion zum Training eines maschinellen Lernmodells um sicherheitsrelevante Aspekte, d.h. einer Kritikalitätsgewichtung, erweitert. Gemäß verschiedenen Ausführungsformen wird also für das Training eine Kombination aus Kritikalität und einer Objektdetektions-Verlustfunktion (wie z.B. Focal Loss, L1-Verlust etc.) als Verlustfunktion verwendet, um so die Detektionsgüte des trainierten maschinellen Lernmodells für kritische "Objekte" wie andere Verkehrsteilnehmer, z.B. von sicherheitskritischen Fußgängern, zu verbessern.

Das Konzept der Kritikalität kann als orthogonal zu den oben beschriebenen Evaluierungsmetriken angesehen werden, da es einzelne Detektionen bzgl. ihrer Relevanz für die Zielaufgabe (hier insbesondere Detektion für die Fahrzeugsteuerung) gewichtet werden. Die Kritikalität kann in jede beliebige Verlustfunktion integriert werden, d.h. mit allen möglichen Verlusten kombiniert werden. Im Folgenden wird ein Ausführungsbeispiel beschrieben, bei der die Kritikalität in einer Focal-Loss-Verlustfunktion berücksichtigt wird. Es sollte beachtet werden, dass im Unterschied zu den bestehenden Hyperparametern des Focal Loss (Parameter zum Kompensieren des Klassenungleichgewichts $\alpha$, Parameter zum Fokussieren auf schwierige Klassen/Samples $\gamma$, typischerweise als Modulierungsfaktor bezeichnet) bei der Hinzunahme der Kritikalität dafür nicht notwendigerweise eine Hyperparameter-Studie durchgeführt werden braucht. Die Kritikalität lässt sich aus den physikalischen Gegebenheiten der Interaktion zwischen Fahrzeug und jeweiligem Verkehrsteilnehmer, im folgenden Beispiel Fußgänger, ableiten.

Als Grundlage für die Kritikalitätsberechnung und die resultierende Gewichtung im Loss wird im Folgenden eine Erreichbarkeit (Reachability Set Framework RSF) verwendet, wie sie in Referenz [1] und Referenz [2] beschrieben ist.

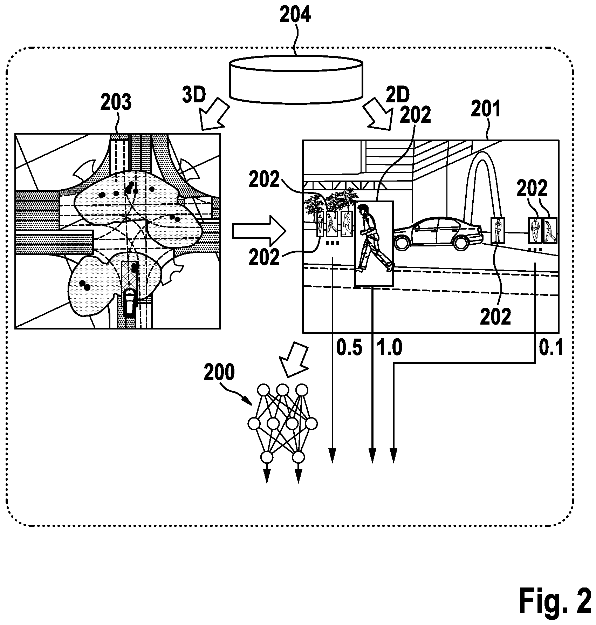

Figur 2 veranschaulicht das Training eines neuronalen Netzes 200 gemäß einer Ausführungsform.

Jedes Trainingsdatenelement enthält eine Trainings-Eingabe, hier ein Eingabebild 201 und Ground-Truth(Grundwahrheits)-Informationen 204 beispielsweise in Form von Bounding-Boxen 202 sowie einer präzisen (z.B. 3D-)Ground-Truth-Verkehrssituations-Information 203 aus der i) relevante Fußgänger identifiziert und ii) die Kritikalität für jeden Fußgänger unter Berücksichtigung eines gewählten Geschwindigkeitsmodells und einer zu Grunde liegenden Geschwindigkeitsmodellparametrierung ermittelt werden.

Dies bedeutet, dass für jeden Fußgänger eine Distanz-Kritikalität und/oder eine TTC-Kritikalität berechnet wird (TTC: time-to-collision). Beispielsweise wird eine resultierende Kritikalität (als Gewichtungsfaktor) durch Kombination dieser beiden Größen ermittelt:

$$\text{TTC-Kritikalität(Tc)} = \max\left(0, -\frac{1}{T_{max}{}^2}t^2 + 1\right)$$

wobei t die Zeit bis zur Kollision zwischen dem "Ego"-Fahrzeug aus dessen Sicht die Objektdetektion durchgeführt wird und beispielsweise das Bild 201 aufgenommen ist) und dem jeweiligen Fußgänger ist. Diese wird beispielsweise aus der Ground-Truth-Verkehrssituations-Information 202 für das jeweilige Trainingsdatenelement gemäß einem Geschwindigkeitsmodell ermittelt (oder kann alternativ auch als Label für das jeweilige Trainingsdatenelement vorgesehen sein). Es kann auch eine Sequenz von Trainingsdatenelementen (z.B. Bildern) in den Trainingsdaten enthalten sein, die es ermöglicht, die relative Geschwindigkeit des Fahrzeugs und des Fußgängers zu ermitteln, um daraus die Zeit t zu berechnen. Der Parameter $T_{max}$ ist beispielsweise auf fünf Sekunden gesetzt.

$$\text{Distanz-Kritikalität(Dc)} = \max\left(0, -\frac{1}{D_{max}{}^2}d^2 + 1\right)$$

wobei d die Distanz zwischen dem Ego-Fahrzeug und dem jeweiligen Fußgänger ist. Diese wird beispielsweise aus der Ground-Truth-Verkehrssituations- Information 202 der Trainingsdaten für das jeweilige Trainingsdatenelement ermittelt (oder kann alternativ auch als Label für das jeweilige Trainingsdatenelement vorgesehen sein). Der Parameter $D_{max}$ ist beispielsweise auf 40 Meter gesetzt.

$$\text{Fußgänger-Kritikalität(c)} = \frac{1}{3}(Dc + 2Tc)$$

In dem Beispiel von Figur 2 ergibt sich beispielsweise für einen Fußgänger, der sich nah am Ego-Fahrzeug befindet, die maximale Fußgänger-Kritikalität von 1,0, für weiter weg entfernte Fußgänger (die sich aber über die Straße bewegen) eine Fußgänger-Kritikalität von 0,5 und für weit entfernte Fußgänger am Straßenrand eine Kritikalität von 0,1.

Anstatt einer Kombination aus nur TTC (immanentes Kollisionsrisiko) und Distanz (potentielles Kollisionsrisiko), wie im obigen Beispiel, können für die Bestimmung des Kritikalitätswerts c auch weitere (insbesondere physikalische) Eigenschaften berücksichtigt werden wie Orientierung, Semantik oder Intention (jeweils des Fußgängers und/oder des (Ego-)Fahrzeugs) verwendet werden.

Der Kritikalitätswert c (wobei c nach der obigen Berechnung im Intervall [0,1] liegt) geht als Parameter in die Verlustfunktion ein. Er wird dafür beispielsweise für jeden (zu detektierenden) Fußgänger (in den Trainingsdatenelementen des jeweiligen Batches, für den die Verlustfunktion ausgewertet wird) individuell berechnet.

So kann im Trainingsprozess der Detektionsfehler für jeden Fußgänger mit dem resultierenden Kritikalitätswert (z.B. als Risikofaktor) in der Verlustfunktion gewichtet werden.

Damit wird die Gewichtung von sicherheitskritischer Fehldetektion erhöht wird und demensprechend ihr Beitrag zum Gesamtverlust erhöht. Somit wird im Training durch Ermittlung des Verlusts in Abhängigkeit der Kritikalität die Objektrelevanz (hinsichtlich Kritikalität) des jeweiligen zu detektierenden Objekts berücksichtigt.

Für das Beispiel einer Focal-Loss-Verlustfunktion bedeutet dies ist der (durch die Berücksichtigung der Kritikalität) Verlustterm für einen jeweiligen Fußgänger (zur Einfachheit hier für eine binäre Klassifikation) beispielsweise gegeben durch

$$-\alpha\left((1-p)^{\gamma-c}\right)\log(p)$$

Der Wert der Verlustfunktion ergibt sich durch Summation über die Verlustterme für alle Fußgänger im jeweiligen Batch. Durch die Verwendung in einer Focal-Loss-Funktion werden insbesondere den kritischen Samples in Kombination mit der berücksichtigten "Hardness" im Focal Loss mehr Gewicht gegeben. Im obigen Beispiel wird der Modulierungsfaktor durch den Kritikalitätswert c verringert.

Eine Alternative dazu ist

$$-\alpha\left((1-p)^{\gamma} + c\right)\log(p)$$

Wie oben erwähnt kann eine Kritikalitätsgewichtung anstatt in einem Focal Loss wie oben beschrieben auch in anderen Klassifikations- oder Regressionsverlusten wie einem L1-Verlust, glatten L1-Verlust, L2-Verlust etc. verwendet werden. Beispielsweise kann ein Faktor für Einzel-Detektionsverluste (d.h. für den Detektionsverlust für jeden Fußgänger oder allgemein Verkehrsteilnehmer) abhängig oder gleich dem Kritikalitätswert gesetzt werden. Für alle Arten von Verlusten kann also der Beitrag von kritische Verkehrsteilnehmern (insbesondere Fußgängern) zum Gesamtverlust (bzw. Batch-Verlust) erhöht werden.

Der Kritikalitätswert c ist adaptiv und wird automatisch auf Basis der physikalischen Gegebenheiten im jeweiligen Trainingsdatenelement eingestellt. Er ermöglicht die Berücksichtigung der Dynamik in der jeweiligen Verkehrssituation (also in der Interaktion zwischen Ego-Fahrzeug und Fußgänger), beispielsweise wenn er wie oben ermittelt wird, wo die Dynamik maßgeblich die Kritikalität definiert. Es können auch die Bewegungsunsicherheit der Fußgänger/-des Fahrzeugs, sowie ein konkretes Geschwindigkeitsmodell einbezogen werden (z.B. gemäß der Reachable-Set-Analyse nach den Referenzen [1] und [2]).

Es kann auch vorgesehen sein, dass der Einfluss der Kritikalitätswerte auf die Verlustterme der Verlustfunktion eingestellt werden kann. Beispielsweise wird der Kritikalitätswert noch mit einem einstellbaren Parameter multipliziert, bevor er zur Gewichtung verwendet wird.

Ein wie oben beschrieben mit Kritikalitätswerten gewichteter Verlust (der als Sicherheits-angepasster Verlust gesehen werden kann) kann auch dazu verwendet werden, Trainingsdatensätze mit Trainingsbeispielen verschiedener "Schwierigkeit" zu erzeugen. Hier wird auf Basis des Verlusts nach kritischen Beispielen mit hohem Fehler gesucht. Die Erkenntnisse über solche so genannten sicherheitsrelevanten "hard negatives" können für folgende Trainingsiterationen im Rahmen z.B. von "Active Learning" verwendet werden.

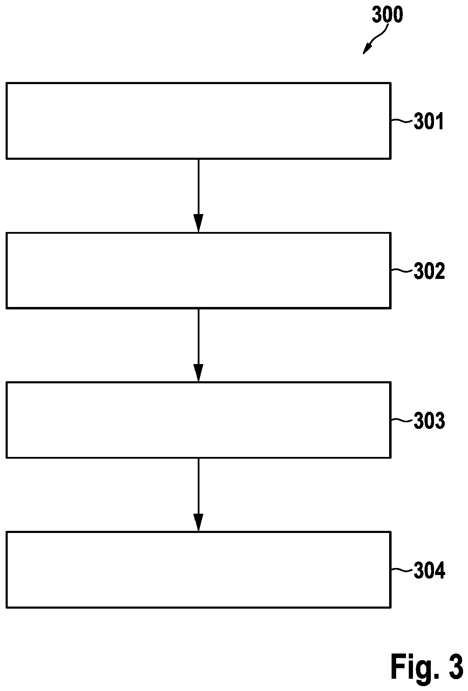

Zusammengefasst wird gemäß verschiedenen Ausführungsformen ein Verfahren bereitgestellt, wie in Figur 3 dargestellt.

Figur 3 zeigt ein Ablaufdiagramm 300, das ein Verfahren zum Trainieren eines maschinellen Lernmodells zum Detektieren von Verkehrsteilnehmern in Verkehrssituationen (die durch Sensordaten, insbesondere Bilddaten repräsentiert werden) veranschaulicht.

In 301 wird für jeden mehrerer aus Sicht eines Fahrzeugs in einer jeweilige Verkehrssituation zu detektierenden Verkehrsteilnehmer in einem Trainingsdatensatz (d.h. Verkehrsteilnehmern zu denen in dem Trainingsdatensatz Ground-Truth-Informationen enthalten sind, also z.B. Bounding-Boxen zu Verkehrsteilnehmern in Trainingsbildern, die jeweils eine jeweilige Verkehrssituation zeigen), ein Maß für das Risiko eines Unfalls des Fahrzeugs mit dem Verkehrsteilnehmer in der jeweiligen Verkehrssituation ermittelt (z.B. der oben beschriebene Kritikalitätswert).

In 302 wird eine Detektion von Verkehrsteilnehmern in dem Trainingsdatensatz durch das maschinelle Lernmodell durchgeführt (d.h. die Trainingsdatenelemente (z.B. die Trainingsbilder) werden dem maschinellen Lernmodell zugeführt, das in Reaktion darauf Detektionsergebnisse ausgibt).

In 303 wird ein Gesamtverlusts der durch das maschinelle Lernmodell durchgeführten Detektion ermittelt, der für jeden der zu detektierenden Verkehrsteilnehmer einen Detektions-Verlust enthält, wobei der Detektions-Verlust im Gesamtverlust abhängig von einem Wert gewichtet wird, der umso größer ist, je höher das für den Verkehrsteilnehmer ermittelte Maß für das Risiko eines Unfalls des Fahrzeugs mit dem Verkehrsteilnehmer ist.

In 304 wird das maschinelle Lernmodell zum Reduzieren des Gesamtverlusts angepasst (d.h. es werden die Parameter des maschinellen Lernmodells (z.B. der Gewichte eines neuronalen Netzes) in Richtung abnehmenden Gesamtverlusts, typischerweise mittels Back-Propagation, angepasst).

Das Verfahren von Figur 3 kann durch einen oder mehrere Computer mit einer oder mehreren Datenverarbeitungseinheiten durchgeführt werden. Der Begriff "Datenverarbeitungseinheit" kann als irgendein Typ von Entität verstanden werden, die die Verarbeitung von Daten oder Signalen ermöglicht. Die Daten oder Signale können beispielsweise gemäß mindestens einer (d.h. einer oder mehr als einer) speziellen Funktion behandelt werden, die durch die Datenverarbeitungseinheit durchgeführt wird. Eine Datenverarbeitungseinheit kann eine analoge Schaltung, eine digitale Schaltung, eine Logikschaltung, einen Mikroprozessor, einen Mikrocontroller, eine Zentraleinheit (CPU), eine Graphikverarbeitungseinheit (GPU), einen Digitalsignalprozessor (DSP), eine integrierte Schaltung einer programmierbaren Gatteranordnung (FPGA) oder irgendeine Kombination davon umfassen oder aus dieser ausgebildet sein. Irgendeine andere Weise zum Implementieren der jeweiligen Funktionen, die hierin genauer beschrieben werden, kann auch als Datenverarbeitungseinheit oder Logikschaltungsanordnung verstanden werden. Es können ein oder mehrere der im Einzelnen hier beschriebenen Verfahrensschritte durch eine Datenverarbeitungseinheit durch eine oder mehrere spezielle Funktionen ausgeführt (z. B. implementiert) werden, die durch die Datenverarbeitungseinheit durchgeführt werden.

Das Verfahren ist also gemäß verschiedenen Ausführungen insbesondere computerimplementiert.

Verschiedene Ausführungsformen können als Eingangsdaten für das maschinelle Lernmodell Sensordaten von verschiedenen Sensoren wie z. B. Video, Radar, LiDAR, Ultraschall, Bewegung, Wärmeabbildung usw. empfangen und verwenden.

**Patentansprüche**

1. Verfahren zum Trainieren eines maschinellen Lernmodells (108, 200) zum Detektieren von Verkehrsteilnehmern in Verkehrssituationen, aufweisend:

Für jeden mehrerer aus Sicht eines Fahrzeugs (101) in einer jeweilige Verkehrssituation zu detektierenden Verkehrsteilnehmer in einem Trainingsdatensatz, Ermitteln (301) eines Maßes für das Risiko eines Unfalls des Fahrzeugs (101) mit dem Verkehrsteilnehmer in der jeweiligen Verkehrssituation;

Durchführen (302) einer Detektion von Verkehrsteilnehmern in dem Trainingsdatensatz durch das maschinelle Lernmodell (108, 200);

Ermitteln (303) eines Gesamtverlusts der durch das maschinelle Lernmodell (108, 200) durchgeführten Detektion, der für jeden der zu detektierenden Verkehrsteilnehmer einen Detektions-Verlust enthält, wobei der Detektions-Verlust im Gesamtverlust abhängig von einem Wert gewichtet wird, der umso größer ist, je höher das für den Verkehrsteilnehmer ermittelte Maß für das Risiko eines Unfalls des Fahrzeugs (101) mit dem Verkehrsteilnehmer ist; und

Anpassen (304) des maschinellen Lernmodells (108, 200) zum Reduzieren des Gesamtverlusts.

2. Verfahren nach Anspruch 1, wobei das Maß des Risiko eines Unfalls des Fahrzeugs (101) mit dem Verkehrsteilnehmer aus einer Schätzung der Zeit der Kollision zwischen dem jeweiligen Verkehrsteilnehmer und dem Fahrzeug (101) in der jeweiligen Verkehrssituation und/oder der Distanz zwischen dem jeweiligen Verkehrsteilnehmer und dem Fahrzeug (101) in der jeweiligen Verkehrssituation ermittelt wird.

3. Verfahren nach Anspruch 1 oder 2, wobei der Trainingsdatensatz für jede der Verkehrssituationen eine 3D-Repräsentation (203) der Verkehrssituation als Ground-Truth-Informationen (204) enthält und das Maß des Risikos aus der 3D-Repräsentation (203) ermittelt wird.

4. Verfahren nach einem der Ansprüche 1 bis 3, wobei der Detektionsverlust ein Focal Loss ist, wobei der Modulierungsfaktor durch das Maß des Risikos verringert wird.

5. Verfahren nach einem der Ansprüche 1 bis 4, wobei die Detektion von Verkehrsteilnehmern in dem Trainingsdatensatz durch das maschinelle Lernmodell (108, 200) für jedes einer Vielzahl von Trainingsdatenelementen eine Regression zur Bestimmung des Orts der Verkehrsteilnehmer und/oder eine Klassifikation der Verkehrsteilnehmer durch Verarbeitung von Sensordaten, die das Trainingsdatenelement enthält, aufweist.

6. Verfahren zum Steuern eines Fahrzeugs (101), aufweisend:

Trainieren eines maschinellen Lernmodells (108, 200) nach einem der Ansprüche 1 bis 5;
Erfassen von Sensordaten bezüglich einer Umgebung des Fahrzeugs (101);
Detektieren von Verkehrsteilnehmern in den Sensordaten mittels des trainierten maschinellen Lernmodells (108, 200); und
Steuern des Fahrzeugs (101) gemäß der Detektion von Verkehrsteilnehmern in den Sensordaten.

7. Datenverarbeitungsvorrichtung (105), die eingerichtet ist, ein Verfahren nach einem der Ansprüche 1 bis 6 durchzuführen.

8. Computerprogramm mit Befehlen, die, wenn sie durch einen Prozessor ausgeführt werden, bewirken, dass der Prozessor ein Verfahren nach einem der Ansprüche 1 bis 6 durchführt.

9. Computerlesbares Medium, das Befehle speichert, die, wenn sie durch einen Prozessor ausgeführt werden, bewirken, dass der Prozessor ein Verfahren nach einem der Ansprüche 1 bis 6 durchführt.

Fig. 1

**Fig. 2**

300

301

302

303

304

**Fig. 3**

Europäisches
Patentamt

European
Patent Office

Office européen
des brevets

# EUROPÄISCHER RECHERCHENBERICHT

**Nummer der Anmeldung**

EP 24 15 7951

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Lyssenko Maria ET AL: "A Safety-Adapted Loss for Pedestrian Detection in Automated Driving", arXiv.org, 5. Februar 2024 (2024-02-05), XP093178760, DOI: 10.48550/arxiv.2402.02986 Gefunden im Internet: URL:https://arxiv.org/pdf/2402.02986 [gefunden am 2024-06-25] * Zusammenfassung * * Abschnitt III auf den Seiten 2-4 * * Abschnitt IV auf den Seiten 4-5 * * Abbildung 1 * ----- | 1-9 | INV. G06V10/82 G06V20/58 G08G1/16 |
| A | US 10 971 005 B1 (ADIREDDY GANESH [US] ET AL) 6. April 2021 (2021-04-06) * Spalte 1, Zeile 44 - Zeile 46 * * Spalte 3, Zeile 8 - Zeile 10 * * Spalte 3, Zeile 32 - Zeile 35 * * Spalte 4, Zeile 5 - Zeile 12 * ----- | 1-9 | |

**RECHERCHIERTE SACHGEBIETE (IPC)**

G06V
G08G

Der vorliegende Recherchenbericht wurde für alle Patentansprüche erstellt

| Recherchenort | Abschlußdatum der Recherche | Prüfer |
|---|---|---|
| Den Haag | 26. Juni 2024 | Wunderlich, Doreen |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 24 15 7951

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2024

| Im Recherchenbericht angeführtes Patentdokument | Datum der Veröffentlichung | Mitglied(er) der Patentfamilie | Datum der Veröffentlichung |
|---|---|---|---|
| US 10971005          B1 | 06-04-2021 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. LYSSENKO** ; **C. GLADISCH** ; **C. HEINZEMANN** ; **M. WOEHRLE** ; **R. TRIEBEL**. Towards Safety-Aware Pedestrian Detection in Autonomous Systems. *2022 IEEE/RSJ International Conference on Intelligent Robots and Systems (IROS), Kyoto, Japan*, 2022, 293-300

- **P. SCHNEIDER** ; **M. BUTZ** ; **C. HEINZEMANN** ; **J. OEHLERKING** ; **M. WOEHRLE**. Towards threat metric evaluation in complex urban scenarios. *2021 IEEE International Intelligent Transportation Systems Conference (ITSC), Indianapolis, IN, USA*, 2021, 1192-1198